# EUROPEAN PATENT SPECIFICATION

(11) **EP 1 971 515 B1**
(45) Date of publication and mention of the grant of the patent: **23.12.2009**
(21) Application number: 06700541.3
(22) Date of filing: 11.01.2006
(51) Int. Cl.: B62D 1/10

(54) **A STEERING WHEEL ARRANGEMENT**
LENKRADANORDNUNG
ARRANGEMENT DE VOLANT DE DIRECTION

(43) Date of publication of application: 24.09.2008
(73) Proprietor: Autoliv Development AB, 447 83 Vårgårda (SE)
(72) Inventor: GROLEAU, Laurent, F-86440 Migne- Auxances (FR)
(74) Representative: Beattie, Alex Thomas Stewart
(86) International application number: PCT/GB2006/000095
(87) International publication number: WO 2007/080357

(56) References cited:
- EP-A- 0 414 245
- FR-A- 2 815 318
- FR-A- 2 833 916

## Description

THIS INVENTION relates to a steering wheel arrangement, and in particular concerns a steering wheel arrangement in which the steering wheel has a central, non-rotating hub, around which an outer peripheral part of the steering wheel may be rotated.

It has previously been proposed to provide a steering wheel unit for use in a motor vehicle. The steering wheel is mounted to rotate relative to a fixed housing, and the axis upon which the steering wheel rotates is offset from the axis of the steering column. The steering column carries a pinion gear, and the steering wheel carries a ring gear which meshes and engages with the pinion gear. As the steering wheel rotates, so the steering wheel column is rotated through the interaction between the ring gear and the pinion gear. Both the ring gear and the pinion gear may be mounted for rotation relative to a fixed element, and a non-rotating central hub of the steering wheel can be attached to the fixed element, and it will be appreciated that the hub therefore remains stationary while an outer peripheral part of the steering wheel may be rotated to rotate the ring gear.

EP 0414245 describes a vehicle steering apparatus according to the preamble of claim 1 and a vehicle including the same.

In embodiments of steering wheels of this type, it is possible to mount a central air-bag unit, within the non-rotating central hub, and this is advantageous since the deployment of the air-bag can be more closely controlled if the air-bag is always in the same orientation when it is activated. This sort of arrangement also facilitates the mounting of control buttons or the like on the upper surface of the air-bag unit.

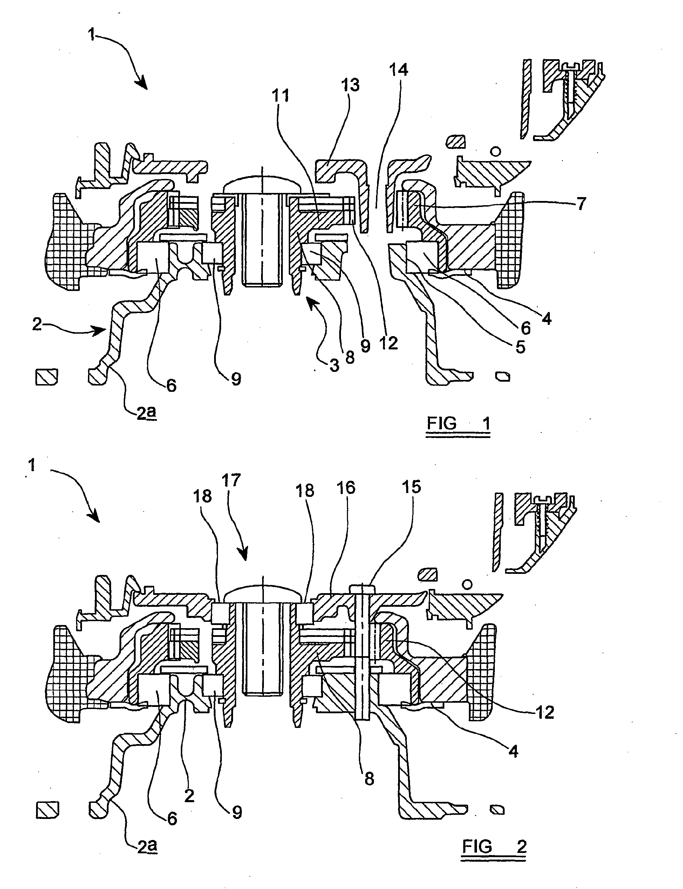

With reference to figure 1 of the accompanying drawings, components of a known steering wheel arrangement 1 as described above are shown. A fixed element 2 is generally in the shape of a disc, having an off-centre substantially circular aperture 3 provided therethrough with a diverging skirt portion 2a extending away from the edges of the disc to allow the fixed element 2 to be mounted to other components. A steering wheel element 4 is mounted to the outer surface 5 of the fixed element 2 by means of a first ring bearing 6. An engagement portion of the steering wheel element 4 extends away from the plane of the disc of the fixed element 2, and has a substantially circular, inward facing, toothed surface 7 provided thereon, forming a ring gear.

A steering column element 8 is mounted to the inner surface of the aperture 3 which is provided in the fixed element 2, by means of a second ring bearing 9. The steering column element 8 also extends away from the plane of the disc of the fixed element 2, in the same direction as does the engagement portion of the steering wheel element 4, and is provided with a pinion gear 11 which lies parallel with the plane of the fixed element 2 and has a toothed outer periphery 12. The arrangement is such that a part of the toothed periphery 12 of the pinion gear 11 engages with a part of the toothed inner surface 7 of the ring gear, so that rotation of the steering wheel element causes rotation of the steering column element 8 in the same sense.

A support element 13 protrudes from the fixed element 2 through a space between the ring gear and the pinion gear 11, passing through the ring gear close to the side of the ring gear furthest from the point at which the pinion gear 11 engages with the ring gear.

The support element 13 supports the non-rotating central hub of the steering wheel, and is the only support therefor. The support element 13 must therefore necessarily be strong and has a large diameter. Because this relatively heavy-gauge support element 13 must pass through the ring gear, the amount of the space within the ring gear that can be occupied by the pinion gear 11 is relatively small, to leave a sufficiently large gap within the ring gear for this to occur. Indeed, in some known designs, two bolts are provided to support the central hub, both passing through the space determined by the ring gear. This means that the ratio between the diameters of the ring gear and the pinion gear 11 must be relatively large, and in the case of the known steering wheel arrangement 1 the ratio between these diameters is around 1/1.3.

The necessity to leave a large gap within the ring gear also leads to a relatively large offset between the axis of rotation of the steering wheel element 4 and the axis of rotation of the steering column element 8, and it is desirable to reduce this offset as much as possible.

It is an object of the present invention to seek to alleviate at least some of the above-discussed difficulties.

According, one aspect of the present invention provides a steering wheel arrangement comprising: a fixed structure comprising first and second fixed elements attached to one another and spaced apart from one another and having respective apertures therethrough; a first rotatable element mounted on the fixed structure for rotation with respect thereto; and a second rotatable element mounted on both the first and the second fixed elements for rotation with respect thereto, whenever the second notable element passes through both of the apertures and is mounted thereto for rotation with respect to the first and second fixed elements; and wherein the first and second rotatable element engage one another so that rotation of the first rotatable element with respect to the fixed structure causes rotation of the second rotatable element with respect to the fixed structure.

Advantageously, the first and second fixed elements are both substantially planar and parallel with one another.

Preferably, the first rotatable element is mounted on the fixed structure by a first ring bearing.

Conveniently, the first rotatable element is mounted on one of the first or second fixed elements.

Advantageously, the second rotatable element is attached to the first and second fixed elements by second and third ring bearings respectively.

Conveniently, the second rotatable element has an outward-facing engagement surface which protrudes from the second rotatable element within the space between the first and second fixed elements.

Advantageously, the first rotatable element protrudes into the space between the first and second fixed elements, and has an inward-facing engagement surface which engages with at least a portion of the outward-facing engagement surface of the second rotatable element.

Preferably, where the first and second fixed elements are attached to one another by means of a connector which passes through a space defined by the inward-facing engagement surface of the first rotatable element.

Conveniently, the first rotatable element defines a ring gear having an inward-facing engagement surface and the second rotatable element comprises a pinion gear having an external diameter that is smaller than the internal diameter of the ring gear and being arranged so that a part of the engagement surface of the pinion gear meshes with a part of the engagement surface of the ring gear, and wherein the connector passes through the ring gear.

Advantageously, a steering wheel is at least indirectly attached to the first rotatable element.

Preferably, a steering column is at least directly attached to the second rotatable element.

Another aspect of the present invention provides a vehicle including a steering wheel arrangement according to any preceding claim.

In order that the present invention may be more readily understood, embodiments thereof will now be described by way of example, with reference to the accompanying drawings, in which:
figure 1 shows components of a known steering wheel arrangement; and
figure 2 shows components of a steering wheel arrangement embodying the present invention.

With reference to figure 2, a steering wheel arrangement 1 embodying the present invention is shown. The steering wheel arrangement 1 embodying the present invention has many of the components of the known steering wheel arrangement 1, and like reference numerals will be used to designate like components.

The fixed element 2 to which the steering wheel element and steering column element are attached comprises a first fixed element, and this first fixed element is attached by a connecting bolt 15 to a second fixed element16, which is of a similar shape to the disc of the first fixed element 2 (having an off-centre, substantially circular aperture 17 formed therethrough), but has a larger external diameter. The planes of the first and second fixed elements 2, 16 are spaced apart from, and parallel with, one another so that an internal space is defined between the first and second fixed elements 2,16. The first and second fixed elements 2,16 and the connecting bolt 15 together comprise a fixed structure of non-rotating components. As with the support element 13 of the known steering wheel arrangement 1, the connecting bolt 15 passes through the ring gear, close to the side of the ring gear 11 furthest from the point at which the pinion gear 11 meshes with the ring gear.

The steering wheel element 4 is attached to the outer surface of the first fixed element 2, and the engagement portion of the steering wheel element 4 extends into the internal space between the first and second fixed elements 2,16. The steering column element 8 is attached to the inner surface of the aperture formed through the first fixed element 2, and also extends into the internal space. The steering column element 8 extends from the first fixed element 2 through the internal space to the second fixed element 16, and is mounted to the inner surface of the aperture 17 formed through the second fixed element 16 by means of a third ring bearing 18, allowing the steering column element 8 to rotate freely with respect to the second fixed element 16.

The mounting of the steering column element 8 to the second fixed element by means of the third ring bearing 18 as well as the connecting bolt 15 provides several advantages. Firstly, the steering column element 8 is fixed in space at an extra location (i.e. where the steering column element 8 meets the second fixed element 16) and the steering column element 8 is therefore more securely held in place and less susceptible to vibration or falling out of alignment. This will also reduce the amount of "play" between components of the steering wheel arrangement 15 and improve the "feel" of the steering wheel arrangement 1 for a user.

Secondly, the second fixed element 16 is supported by the connecting bolt 15 and also by the connection with the steering column element 8, and is therefore secured in two locations, rather than in only one, as is the case with the known steering wheel arrangement 1 depicted in figure 1. The connecting bolt 15 is therefore not required to be as strong as the connecting element 13 of the known steering wheel arrangement 1, and the connecting bolt 15 can therefore be of a lighter gauge than the connecting element 13.

This means that the space within the ring gear that is required to allow the connecting bolt 15 to pass through the ring gear is reduced when compared to the space that is required in the known steering wheel arrangement 1. The ring gear can therefore be made smaller, and the pinion gear 11 can occupy a greater proportion of the space within the ring gear.

This has the benefit of allowing the overall diameter of the steering wheel arrangement 1 to be less (the external diameter of the arrangement may be reduced by about 10%) and the mass reduced by 200g), thus allowing the steering wheel arrangement 1 to be smaller, lighter and cheaper to construct than the known steering wheel arrangement 1.

In addition, the gear ratio between the pinion gear 11 and the ring gear can be smaller, and it is envisaged that steering wheel arrangements embodying the present invention may have a gear ratio of around 1/1.6. This allows the steering wheel arrangement to be used with certain small cars which cannot accept a 1/1.3 gear ratio.

A further benefit is that the offset between the axis of rotation of the steering wheel and the axis of rotation of the steering column may be reduced. In embodiments of the invention it has been found that the offset may be as little as 45mm, compared to 8.15mm with existing designs.

It is envisaged that in embodiments of the present invention, the steering wheel element may be mounted on the second fixed element for rotation with respect thereto.

It will be appreciated that steering wheel arrangements embodying the present invention may be constructed which display several advantages with respect to known steering wheel arrangements.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A steering wheel arrangement (1) comprising:
a fixed structure comprising first and second fixed elements (2, 16) attached to one another and spaced apart from one another, and having respective apertures (17) formed therethrough;
a first rotatable element (4) mounted on the fixed structure for rotation with respect thereto; and
a second rotatable element (8) mounted on both the first and the second fixed elements (2, 16) for rotation with respect thereto, wherein the second rotatable element (8) passes through both of the apertures (17) and is mounted thereto for rotation with respect to the first and second fixed elements (2, 16), **characterized in that**
the first and second rotatable elements (4, 8) engage one another so that rotation of the first rotatable element (4) with respect to the fixed structure causes rotation of the second rotatable element (8) with respect to the fixed structure.

2. A steering wheel arrangement (1) according to claim 1, wherein the first and second fixed elements (2, 16) are both substantially planar and parallel with one another.

3. A steering wheel arrangement (1) according to claim 1 or 2, wherein the first rotatable element (4) is mounted on the fixed structure by a first ring bearing (6).

4. A steering wheel arrangement (1) according to any preceding claim
wherein the first rotatable element (4) is mounted on one of the first or second fixed elements (2, 16).

5. A steering wheel arrangement (1) according to any preceding claim
wherein the second rotatable element (8) is attached to the first and second fixed elements (2, 16) by second (9) and third (18) ring bearings respectively.

6. A steering wheel arrangement (1) according to any preceding claim,
wherein the second rotatable element (8) has an outward-facing engagement surface (12) which protrudes from the second rotatable element (8) within the space between the first and second fixed elements (2,16).

7. A steering wheel arrangement (1) according to claim 6, wherein the first rotatable element (4) protrudes into the space between the first and second fixed elements (2, 16), and has an inward-facing engagement surface which engages with at least a portion of the outward-facing engagement surface (12) of the second rotatable element (8).

8. A steering wheel arrangement (1) according to claim 7, wherein the first and second fixed elements (2, 16) are attached to one another by means of a connector which passes through a space defined by the inward-facing engagement surface of the first rotatable element (4).

9. A steering wheel arrangement (1) according to claim 8, wherein the first rotatable element (4) defines a ring gear having an inward-facing engagement surface and the second rotatable element (8) comprises a pinion gear (11) having an external diameter that is smaller than the internal diameter of the ring gear and being arranged so that a part of the engagement surface of the pinion gear (11) meshes with a part of the engagement surface of the ring gear, and wherein the connector passes through the ring gear.

10. A steering wheel arrangement (1) according to any preceding claim,
wherein a steering wheel is at least indirectly attached to the first rotatable element (4).

11. A steering wheel arrangement (1) according to any preceding claim,
wherein a steering column is at least directly attached to the second rotatable element (8).

12. A vehicle including a steering wheel arrangement (15) according to any preceding claim.

## Patentansprüche

1. Lenkradanordnung (1), die Folgendes umfasst:
eine feste Konstruktion, die ein erstes und ein zweites festes Element (2, 16) umfasst, die aneinander befestigt sind und voneinander beabstandet sind und jeweilige Öffnungen (17) aufweisen, die dort hindurch gebildet sind;
ein erstes drehbares Element (4), das an der festen Konstruktion angebracht ist, um sich im Verhältnis zu dieser zu drehen; und
ein zweites drehbares Element (8), das sowohl an dem ersten als auch an dem zweiten festen Element (2, 16) angebracht ist, um sich im Verhältnis zu diesem zu drehen, wobei das zweite drehbare Element (8) durch beide Öffnungen (17) hindurch verläuft und daran angebracht ist, um sich im Verhältnis zu dem ersten und zweiten festen Element (2, 16) zu drehen, **dadurch gekennzeichnet, dass**
das erste und zweite drehbare Element (4, 8) ineinander eingreifen, so dass eine Drehung des ersten drehbaren Elements (4) im Verhältnis zu der festen Konstruktion eine Drehung des zweiten drehbaren Elements (8) im Verhältnis zu der festen Konstruktion verursacht.

2. Lenkradanordnung (1) nach Anspruch 1, wobei das erste und zweite feste Element (2, 16) beide im Wesentlichen planar und parallel zueinander angeordnet sind.

3. Lenkradanordnung (1) nach Anspruch 1 oder 2, wobei das erste drehbare Element (4) mit Hilfe eines ersten Lagerrings (6) an der festen Konstruktion angebracht ist.

4. Lenkradanordnung (1) nach einem der vorhergehenden Ansprüche, wobei das erste drehbare Element (4) entweder am ersten oder am zweiten festen Element (2, 16) angebracht ist.

5. Lenkradanordnung (1) nach einem der vorhergehenden Ansprüche, wobei das zweite drehbare Element (8) jeweils mit Hilfe eines zweiten (9) und dritten (18) Lagerrings an dem ersten und dem zweiten festen Element (2, 16) angebracht ist.

6. Lenkradanordnung (1) nach einem der vorhergehenden Ansprüche, wobei das zweite drehbare Element (8) eine nach außen weisende Eingriffsfläche (12) aufweist, die von dem zweiten drehbaren Element (8) innerhalb des Raums zwischen dem ersten und zweiten festen Element (2, 16) hervorsteht.

7. Lenkradanordnung (1) nach Anspruch 6, wobei das erste drehbare Element (4) in den Raum zwischen dem ersten und zweiten festen Element (2, 16) hineinragt und eine nach innen weisende Eingriffsfläche aufweist, die mindestens in einen Abschnitt der nach außen weisenden Eingriffsfläche (12) des zweiten drehbaren Elements (8) eingreift.

8. Lenkradanordnung (1) nach Anspruch 7, wobei das erste und zweite feste Element (2, 16) mit Hilfe eines Verbindungselements aneinander befestigt sind, das durch einen Raum hindurch verläuft, der von der nach innen weisenden Eingriffsfläche des ersten drehbaren Elements (4) definiert wird.

9. Lenkradanordnung (1) nach Anspruch 8, wobei das erste drehbare Element (4) ein Außenrad definiert, das eine nach innen weisende Eingriffsfläche aufweist, und das zweite drehbare Element (8) ein Ritzel (11) umfasst, das einen Außendurchmesser aufweist, der kleiner ist als der Innendurchmesser des Außenrads, und so angeordnet ist, dass ein Teil der Eingriffsfläche des Ritzels (11) in einen Teil der Eingriffsfläche des Außenrads eingreift, und wobei das Verbindungselement durch das Außenrad hindurch verläuft.

10. Lenkradanordnung (1) nach einem der vorhergehenden Ansprüche, wobei das Lenkrad mindestens indirekt an dem ersten drehbaren Element (4) angebracht ist.

11. Lenkradanordnung (1) nach einem der vorhergehenden Ansprüche, wobei eine Lenksäule mindestens direkt an dem zweiten drehbaren Element (8) angebracht ist.

12. Fahrzeug, das eine Lenkradanordnung (15) nach einem der vorhergehenden Ansprüche umfasst.

## Revendications

1. Un agencement de volant de direction (1) comportant :
une structure fixe comportant un premier et un deuxième éléments fixes (2, 16) attachés l'un à l'autre et espacés l'un de l'autre, et ayant des ouvertures respectives (17) formées à travers eux ;
un premier élément pouvant entrer en rotation (4) monté sur la structure fixe pour une rotation par rapport à cette dernière ; et
un deuxième élément pouvant entrer en rotation (8) monté à la fois sur le premier et le deuxième éléments fixes (2, 16) pour une rotation par rapport à ces derniers, où le deuxième élément pouvant entrer en rotation (8) passe à travers les deux ouvertures (17) et est monté sur ces dernières pour une rotation par rapport au premier et au deuxième éléments fixes (2, 16), **caractérisé en ce que**
le premier et le deuxième éléments pouvant entrer en rotation (4, 8) se mettent en prise l'un avec l'autre de sorte que la rotation du premier élément pouvant entrer en rotation (4) par rapport à la structure fixe amène la rotation du deuxième élément pouvant entrer en rotation (8) par rapport à la structure fixe.

2. Un agencement de volant de direction (1) selon la revendication 1, où le premier et le deuxième éléments fixes (2, 16) sont tous les deux essentiellement planaires et parallèles l'un à l'autre.

3. Un agencement de volant de direction (1) selon la revendication 1 ou 2, où le premier élément pouvant entrer en rotation (4) est monté sur la structure fixe par un premier palier annulaire (6).

4. Un agencement de volant de direction (1) selon n'importe quelle revendication précédente où le premier élément pouvant entrer en rotation (4) est monté sur un élément parmi le premier et le deuxième éléments fixes (2, 16).

5. Un agencement de volant de direction (1) selon n'importe quelle revendication précédente où le deuxième élément pouvant entrer en rotation (8) est attaché au premier et au deuxième éléments fixes (2, 16) par un deuxième (9) et un troisième (18) paliers annulaires respectivement.

6. Un agencement de volant de direction (1) selon n'importe quelle revendication précédente, où le deuxième élément pouvant entrer en rotation (8) a une surface de mise en prise faisant face vers l'extérieur (12) qui fait saillie à partir du deuxième élément pouvant entrer en rotation (8) à l'intérieur de l'espace entre le premier et le deuxième éléments fixes (2, 16).

7. Un agencement de volant de direction (1) selon la revendication 6, où le premier élément pouvant entrer en rotation (4) fait saillie dans l'espace entre le premier et le deuxième éléments fixes (2, 16), et a une surface de mise en prise faisant face vers l'intérieur qui se met en prise avec au moins une portion de la surface de mise en prise faisant face vers l'extérieur (12) du deuxième élément pouvant entrer en rotation (8).

8. Un agencement de volant de direction (1) selon la revendication 7, où le premier et le deuxième éléments fixes (2, 16) sont attachés l'un à l'autre au moyen d'un connecteur qui passe à travers un espace défini par la surface de mise en prise faisant face vers l'intérieur du premier élément pouvant entrer en rotation (4).

9. Un agencement de volant de direction (1) selon la revendication 8, où le premier élément pouvant entrer en rotation (4) définit une couronne ayant une surface de mise en prise faisant face vers l'intérieur et le deuxième élément pouvant entrer en rotation (8) comporte un pignon d'engrenage (11) ayant un diamètre externe qui est plus petit que le diamètre interne de la couronne et étant agencé de façon à ce qu'une partie de la surface de mise en prise du pignon d'engrenage (11) s'engrène avec une partie de la surface de mise en prise de la couronne, et où le connecteur passe à travers la couronne.

10. Un agencement de volant de direction (1) selon n'importe quelle revendication précédente, où un volant de direction est au moins indirectement attaché au premier élément pouvant entrer en rotation (4).

11. Un agencement de volant de direction (1) selon n'importe quelle revendication précédente, où une colonne de direction est au moins directement attachée au deuxième élément pouvant entrer en rotation (8).

12. Un véhicule comprenant un agencement de volant de direction (1) selon n'importe quelle revendication précédente.
